# EUROPÄISCHE PATENTANMELDUNG

(11) **EP 4 848 102 A1**
(43) Veröffentlichungstag der Anmeldung: **02.12.2026**
(21) Anmeldenummer: 26181216.8
(22) Anmeldetag: 27.05.2026
(51) Int. Cl.: G06F 16/3329, G06F 16/901

(54) **VERFAHREN UND SYSTEM ZUR ERMITTLUNG VON PRÄZEDENZENTSCHEIDUNGEN**

(30) Priorität: 27.05.2025 DE 102025120714
(71) Anmelder: FORBENCAP GmbH, 87527 Sonthofen (DE)
(72) Erfinder: GÖTZ, Stefan, 85659 Forstern (DE)
(74) Vertreter: advotec.

(57) **Zusammenfassung**

Verfahren zur automatisierten Ermittlung von zu einem juristischen Sachverhalt passenden Präzedenzentscheidungen, umfassend die Schritte:
a) Empfangen (S1) einer Suchanfrage (200) mit Angaben zu Instanzebene, Sachverhalt und/oder Rechtsnorm;
b) extraktives und semantisches Parsen (S2) der Suchanfrage (200) mittels eines Sprach-Modells (102), wobei eine mehrdimensionale Argumentstruktur als Graph-Repräsentation (202) erzeugt wird;
c) Umwandeln (S3) der Graph-Repräsentation (202) in einen d-dimensionalen Vektorraumsatz (204) durch ein trainiertes Embedding-Netzwerk (104);
d) Retrieval (S4) einer Menge (212) von Kandidatentscheidungen aus einer Graph-Datenbank (206), indem der Vektorraumsatz (204) mit vorab indexierten Entscheidungsvektoren (208) verglichen; und
e) Ranking (S5) der Menge (212) von Kandidatentscheidungen mittels eines neuronalen Rerankers (106), der gewichtet (α, β) auf eine semantische Ähnlichkeitsmetrik (214) und/oder Norm-Konformitätsscore (216) und/oder eine Online-Feedback-Variable (218) reagiert.

## Beschreibung

Die Erfindung betrifft ein Verfahren und ein System zur automatisierten Ermittlung von zu einem juristischen Sachverhalt passenden Präzedenzentscheidungen.

### Stand der Technik

Die automatisierte Suche nach passenden Präzedenzentscheidungen hat in den letzten Jahren zwar deutliche Fortschritte verzeichnet, erfüllt jedoch immer noch nicht die praktischen Anforderungen von Gerichten, Kanzleien und Rechtsabteilungen. Kommerzielle Rechercheplattformen basieren überwiegend auf Stichwort- und Metadatenfiltern, behandeln Urteile als einfache Wortbeutel und liefern dadurch lange Trefferlisten, die einen hohen manuellen Sichtungsaufwand verursachen. Neuere Arbeiten setzen zwar Transformer-basierte Vektorrepräsentationen ein und verbessern Recall und Precision gegenüber klassischen TF-IDF-Ansätzen, modellieren juristische Texte jedoch weiterhin nur als lineare Tokenfolgen; argumentative Strukturen und prozessuale Hierarchien bleiben dabei unberücksichtigt.

Erste Netzwerkkombinationen nutzen zwar Zitationshäufigkeiten, arbeiten aber mit statischen Gewichtungen und berücksichtigen die Instanzebene nicht systematisch in der Ähnlichkeitsberechnung. Retrieval-Augmented-Generation-Prototypen kombinieren semantisches Retrieval mit Large-Language-Model-Antworten, leiden jedoch weiterhin unter irrelevanten oder unzureichend begründeten Belegen, weil das zugrunde liegende Retrieval die rechtliche Autorität einer Quelle nicht differenziert bewertet. Hinzu kommt, dass die schrittweise Umsetzung des EU-KI-Gesetzes nachvollziehbare und risikokontrollierte KI-Anwendungen verlangt; bestehende Systeme, die sich ausschließlich auf textuelle Ähnlichkeit stützen, können diese Transparenzanforderungen kaum erfüllen.

Vor diesem Hintergrund besteht weiterhin das Bedürfnis nach einem rechnergestützten Verfahren, das ausgehend von einer fachlich formulierten Suchanfrage präzise, instanzadäquat und unionsrechtskonform diejenigen Präzedenzentscheidungen identifiziert, die für den konkreten Sachverhalt am aussagekräftigsten sind, und vorzugsweise auch eine belastbare Grundlage für die spätere Argumentation schafft.

Es ist eine Aufgabe der Erfindung, ein dahingehend verbessertes Verfahren und/oder ein dahingehend verbessertes System anzugeben.

### Offenbarung der Erfindung

Die Aufgabe wird gelöst durch ein Verfahren gemäß den Merkmalen des Patentanspruchs 1. Die Aufgabe wird gelöst durch ein System gemäß den Merkmalen des Patentanspruchs 15.

Gemäß einem ersten Aspekt wird ein Verfahren zur automatisierten Ermittlung von zu einem juristischen Sachverhalt passenden Präzedenzentscheidungen vorgeschlagen, umfassend die Schritte:
a) Empfangen einer Suchanfrage mit Angaben zu Instanzebene, Sachverhalt und/oder Rechtsnorm;
b) extraktives und semantisches Parsen der Suchanfrage mittels eines Sprach-Modells, wobei eine mehrdimensionale Argumentstruktur mit Elementen wie Prämisse, Konklusion, Normbezug und Instanzrang als Graph-Repräsentation erzeugt wird;
c) Umwandeln der Graph-Repräsentation in einen d-dimensionalen Vektorraumsatz durch ein trainiertes Embedding-Netzwerk;
d) Retrieval einer Menge von Kandidatentscheidungen aus einer Graph-Datenbank, indem der Vektorraumsatz mit vorab indexierten Entscheidungsvektoren verglichen und ein Instanzhierarchie-Faktor angewendet wird; und
e) Ranking der Kandidatentscheidungen mittels eines neuronalen Rerankers, der gewichtet auf eine semantische Ähnlichkeitsmetrik und/oder vorzugsweise einen Norm-Konformitätsscore und/oder eine Online-Feedback-Variable reagiert, welche sich vorzugsweise aus Zitiererfolgen realer Gerichtsentscheidungen speist, um derart die zu dem juristischen Sachverhalt passende Präzedenzentscheidung zu ermitteln.

Vorzugsweise wird die Graph-Repräsentation vor dem Umwandeln in den d-dimensionalen Vektorraumsatz in eine speichereffiziente Graphdatenstruktur normalisiert, welche eine Knotenmerkmal-Matrix, eine Kantenindex-Matrix und einen Kantenattribut-Vektor umfasst. Weiterhin bevorzugt weist die Graph-Datenbank eine mehrstufige Indexstruktur auf, umfassend einen Approximate-Nearest-Neighbor-Index, in dem die vorab indexierten Entscheidungsvektoren gespeichert sind, und einen hiervon logisch getrennten Graphstrukturindex, in dem zu Entscheidungsgraphen der Kandidatentscheidungen komprimierte Graphsignaturen gespeichert sind. Weiterhin bevorzugt umfasst das Retrieval, dass zunächst mittels des Approximate-Nearest-Neighbor-Index eine erste Kandidatenmenge bestimmt wird, anschließend für die erste Kandidatenmenge die komprimierten Graphsignaturen aus dem Graphstrukturindex abgerufen und mit einer aus der Graph-Repräsentation erzeugten Anfrage-Graphsignatur verglichen werden, um eine zweite Kandidatenmenge zu bestimmen, und vollständige Entscheidungsgraphen nur für Kandidatentscheidungen der zweiten Kandidatenmenge geladen werden. Zudem bevorzugt wird der neuronale Reranker nur auf die zweite Kandidatenmenge oder auf höchstens N Kandidatentscheidungen der zweiten Kandidatenmenge angewendet, wobei N in Abhängigkeit von einem vorgegebenen Antwortzeitbudget und/oder einer aktuellen Prozessor-, Speicher- oder GPU-Auslastung festgelegt wird.

Die Knotenmerkmal-Matrix kann eine Zeile pro Knoten der Graph-Repräsentation umfassen, wobei jede Zeile wenigstens eine Knotentypkennung und optional weitere numerische Attribute des jeweiligen Knotens enthält. Die Kantenindex-Matrix kann für jede Kante ein Paar von Knotenindizes speichern, welches einen Quellknoten und einen Zielknoten der jeweiligen Kante bezeichnet. Der Kantenattribut-Vektor kann für jede Kante wenigstens einen numerischen Kantenwert, insbesondere eine quantisierte Wahrscheinlichkeit einer juristischen Gültigkeit oder eine Kantenartkennung, enthalten. Die Graphdatenstruktur ist speichereffizient, weil die Graph-Repräsentation nicht als vollständiger Text oder objektbasierte Graphstruktur gespeichert wird, sondern als kompakte numerische Matrix- und Vektordatenstruktur mit diskreten Typkennungen und quantisierten Attributwerten.

Eine komprimierte Graphsignatur kann aus der Graph-Repräsentation erzeugt werden, indem Knotentypen, Kantentypen und/oder quantisierte Kantenattribute zu einer festen Länge kodiert werden. Beispielsweise kann aus einer Häufigkeitsverteilung der Knotentypen und/oder Kantentypen ein Zählvektor erzeugt werden, der anschließend durch Hashing, MinHash, SimHash oder Bloom-Filter-Kodierung in eine Signatur fester Bitlänge überführt wird. Der Vergleich zweier Graphsignaturen kann mittels Hamming-Distanz, Jaccard-Ähnlichkeit, Kosinusähnlichkeit oder einer gewichteten Signaturdistanz erfolgen.

Die zweite Kandidatenmenge ist vorzugsweise eine gegenüber der ersten Kandidatenmenge reduzierte Teilmenge. Alternativ kann sie bei Gleichstand oder bei Nichterreichen eines Reduktionsschwellwerts auch gleich groß wie die erste Kandidatenmenge sein. Entscheidend ist, dass vollständige Entscheidungsgraphen erst nach der Prüfung der komprimierten Graphsignaturen geladen werden.

In einer weiteren Ausführungsform kann das Retrieval in Echtzeit erfolgen und eine maximale Antwortzeit von 500 ms zwischen dem Empfangen der Suchanfrage und dem Ausgeben des Rankings nicht überschreiten, wobei hierfür eine Vektorindexierung der Entscheidungsvektoren, ein Caching wiederkehrender Suchanfragen und eine parallele Verarbeitung wenigstens des Retrievals und des Rankings eingesetzt werden.

In einer weiteren Ausführungsform werden die Zwischenergebnisse in einer append-only Audit-Datenbank gespeichert und jeder Audit-Eintrag umfasst einen kryptographischen Hashwert wenigstens eines vorhergehenden Audit-Eintrags und wenigstens eines Zwischenergebnisses.

Das vorgeschlagene Verfahren sieht zunächst die Aufnahme einer Suchanfrage vor, die vorzugsweise Informationen zur Instanzebene, zum Sachverhalt und/oder zu einschlägigen Rechtsnormen enthält. Dies ermöglicht eine erste thematische Eingrenzung, durch die nur solche Daten berücksichtigt werden, die für die gerichtliche Einordnung relevant sind. Im nächsten Schritt wird die Anfrage mittels eines Sprachmodells sowohl extraktiv als auch semantisch analysiert. Ein Sprachmodell ist vorzugsweise ein trainiertes neuronales Netz, das natürliche Sprache in strukturierte Daten überführen kann. Dabei entsteht eine mehrdimensionale Argumentstruktur, die zentrale juristische Elemente wie Prämisse, Konklusion, Normbezug und Instanzrang in einer sogenannten Graph-Repräsentation erfasst. Diese Darstellung erlaubt es, juristische Argumentationen formal abzubilden und in ihren logischen Beziehungen zu analysieren.

Die erzeugte Graph-Repräsentation wird anschließend durch ein trainiertes Embedding-Netzwerk, vorzugsweise ein auf juristischen Texten feinabgestimmtes Deep-Learning-Modell, in einen d-dimensionalen Vektorraumsatz überführt. Diese Vektorstruktur erlaubt eine effiziente Vergleichbarkeit mit bestehenden Entscheidungen im Suchraum. Die Vektoren bilden eine verdichtete, semantisch orientierte Repräsentation juristischer Inhalte und ermöglichen so eine wesentlich präzisere Erkennung kontextuell ähnlicher Entscheidungen als reine Schlagwortsuche.

Anschließend wird eine Menge von relevanten Kandidatentscheidungen aus einer Datenbank abgerufen, die vorzugsweise graphbasiert organisiert ist, sodass strukturelle Ähnlichkeiten direkt mit der Anfrage abgeglichen werden können. Die Auswahl erfolgt durch den Vergleich des Anfragenvektors mit vorab indexierten Entscheidungsvektoren. Dabei wird ein Instanzhierarchie-Faktor berücksichtigt, der vorzugsweise die Bedeutung oder Autorität der jeweiligen Gerichtsentscheidung nach ihrer Stellung im gerichtlichen Instanzenzug gewichtet. Diese Gewichtung trägt dazu bei, höherwertige Entscheidungen in der Trefferliste priorisiert zu behandeln.

Die gefilterten Kandidatentscheidungen werden anschließend durch einen neuronalen Reranker bewertet, der vorzugsweise eine oder mehrere der folgenden Größen berücksichtigt: eine semantische Ähnlichkeitsmetrik zwischen Anfrage und Entscheidung, vorzugsweise einen Norm-Konformitätsscore, der die Übereinstimmung mit europarechtlichen Vorgaben misst, und/oder eine Online-Feedback-Variable. Letztere basiert vorzugsweise auf realen Zitiererfolgen in nachfolgenden Urteilen oder auf Rückmeldungen von Nutzerinnen und Nutzern. Der Reranker, vorzugsweise ein Deep-Learning-Modell mit adaptiven Gewichtungen, verbessert durch diese mehrdimensionale Bewertung die Auswahlentscheidung dahingehend, dass solche Präzedenzentscheidungen bevorzugt ausgegeben werden, die nicht nur thematisch passen, sondern auch juristisch besonders überzeugend und einflussreich sind. Dies führt zu einer zuverlässigeren Unterstützung juristischer Analysen und einer Reduktion irrelevanter Treffer.

Die zur Ausführung des Verfahrens eingesetzten Modelle werden jeweils auf spezialisierten, domänenspezifischen juristischen Datensätzen trainiert. Das Sprachmodell zur semantischen Analyse der Suchanfrage wird vorzugsweise auf annotierten Gerichtsentscheidungen, Schriftsätzen und juristischen Kommentierungen mit markierten Argumentationsbestandteilen trainiert, um Prämissen, Konklusionen und Normbezüge zuverlässig erkennen zu können. Als Eingabedaten dienen vorzugsweise strukturierte JSON-Objekte oder Textabschnitte mit Metadaten zur Instanz, zum rechtlichen Kontext und zur Entscheidung. Die Ausgabe des Sprachmodells ist ein maschinenlesbarer Graph, der argumentative Knoten (z. B. Subsumtion, Obersatz) sowie gerichtliche Parameter (z. B. Instanzrang) enthält und intern als gerichteter Kantenbaum mit Attributen dargestellt wird.

Das Embedding-Modell, das zur Transformation dieser Graph-Repräsentationen in Vektoren verwendet wird, wird vorzugsweise mit einer Kombination aus gerichtlichen Entscheidungsgraphen und deren annotierten Ähnlichkeitswerten trainiert. Hierbei kann ein Triplet-Learning-Ansatz eingesetzt werden, bei dem jeweils ein Ankerfall, ein ähnlicher Fall und ein unähnlicher Fall gemeinsam in das Training eingehen. Die Ausgabe sind Vektorsätze in einem d-dimensionalen Raum, vorzugsweise mit 384 bis 768 Dimensionen.

Für den Reranker wird vorzugsweise ein zweistufiges Modell trainiert: zunächst eine semantische Ähnlichkeitsklassifikation mittels eines Cross-Encoders, darauf aufbauend ein gewichtendes Modell (z. B. ein Gradient Boosting Decision Tree), das zusätzlich Kontextdaten wie Instanzfaktor und Normkonformität berücksichtigt. Die Trainingsdaten bestehen hierbei aus Paaren von Suchanfragen und passenden Entscheidungen mit Ranking-Anmerkungen, ergänzt durch Feedbackdaten aus realer Nutzung (z. B. "wurde zitiert", "wurde ausgewählt").

Ein erstes Ausführungsbeispiel betrifft die automatische Recherche im Rahmen einer verwaltungsgerichtlichen Streitigkeit zur DSGVO-Auslegung. Eine Nutzerin gibt eine Anfrage ein, in der sie eine Auseinandersetzung über Art. 6 Abs. 1 lit. f DSGVO beschreibt und angibt, dass es sich um eine zweitinstanzliche verwaltungsgerichtliche Entscheidung handelt. Das System analysiert die Struktur der Anfrage, extrahiert eine Argumentstruktur mit Normbezug und überträgt diese in eine Vektorrepräsentation. Anschließend werden passende Entscheidungen aus einer gerichteten Graph-Datenbank abgerufen, die ebenfalls nach Argumentstruktur indexiert sind. Der Reranker bewertet die gefundenen Entscheidungen ggf. zusätzlich danach, ob sie eine EU-konforme Auslegung bzw. eine konforme Auslegung einer gemeinschaftlichen Rechtsordnung umfassen, und schlägt die Top-3-Entscheidungen mit einem strukturierten Argumentationsvorschlag vor.

Ein zweites Ausführungsbeispiel betrifft eine anwaltliche Vorbereitung einer Revision beim Bundesgerichtshof im Zivilrecht. Die Eingabe erfolgt in Form eines Schriftsatz-Exzerpts, aus dem das System die Hauptargumente, streitentscheidenden Normen sowie die Instanzebene extrahiert. Nach Analyse werden passende Urteile aus höchstrichterlicher Rechtsprechung mit vergleichbarer Subsumtionslogik vorgeschlagen. Da eine frühere BGH-Entscheidung, die semantisch ähnlich ist, bereits mehrfach in realen Urteilen zitiert wurde, wird sie durch das lernende Feedbacksystem priorisiert und als bevorzugter Referenzfall empfohlen. Der generierte Argumentationsvorschlag referenziert zudem automatisch eine offene Vorlagefrage beim EuGH, was die strategische Einordnung des Falles im unionsrechtlichen Kontext verbessert.

Es versteht sich, dass die erfindungsgemäßen Schritte sowie weitere optionale Schritte nicht notwendigerweise in der aufgezeigten Reihenfolge ausgeführt werden müssen, sondern auch in einer anderen Reihenfolge ausgeführt werden können. Ferner können weitere Zwischenschritte vorgesehen sein. Die einzelnen Schritte können zudem einen oder mehrere Unterschritte umfassen, ohne dass hierdurch der Umfang des erfindungsgemäßen Verfahrens verlassen wird.

Die juristische Bedeutung der Knoten und Scores stellt dabei eine fachliche Randbedingung dar; der technische Beitrag liegt in der spezifischen rechnergestützten Transformation, Indexierung, Zwischenspeicherung und mehrstufigen Kandidatenreduktion der Graph- und Vektordaten.

Gemäß einem zweiten Aspekt wird ein System zur automatisierten Ermittlung von zu einem juristischen Sachverhalt passenden Präzedenzentscheidungen vorgeschlagen, wobei das System eine Auswerte- und Recheneinrichtung aufweist, die dazu ausgebildet ist, die Schritte gemäß dem ersten Aspekt auszuführen.

Die für das Verfahren gemachten Ausführungen gelten für das System entsprechend. Dabei versteht es sich, dass sprachliche Abwandlungen von verfahrensmäßig formulierten Merkmalen nach sprachüblicher Praxis für das System umformulierbar sind, ohne dass derartige Formulierungen explizit hier aufgeführt werden müssen.

In einem weiteren Aspekt wird vorgeschlagen, dass zusätzlich ein strukturierter Argumentationsvorschlag erzeugt wird, indem ein Retrieval-Augmented-Generation-Modul den Top-k-Rang des Rankings gemeinsam mit der Argumentstruktur in ein Sprachmodell einspeist bzw. gepromptet.

Das Verfahren sieht vor, dass aus den zuvor ermittelten und gerankten Entscheidungen ein strukturierter Argumentationsvorschlag erzeugt wird. Hierzu wird vorzugsweise ein sogenanntes Retrieval-Augmented-Generation-Modul verwendet. Ein solches Modul kombiniert abgerufene Dokumente mit generativen Sprachmodellen, indem relevante Informationen aus externen Quellen als Kontext in das Sprachmodell eingespeist, also "gepromptet", werden. Die Eingabe in das Sprachmodell umfasst vorzugsweise die Argumentstruktur der ursprünglichen Anfrage sowie die am höchsten bewerteten Entscheidungen aus dem Ranking, typischerweise die Top-k-Ergebnisse. Diese Kombination erlaubt eine gezielte, kontextualisierte Erzeugung von Texten, die nicht nur syntaktisch stimmig, sondern juristisch fundiert aufgebaut sind. Dadurch lässt sich ein Vorschlag erzeugen, der die entscheidungstragenden Erwägungen mit Bezug auf frühere Rechtsprechung darlegt und für die Nutzerin eine konkrete argumentative Anschlussfähigkeit schafft.

In einem weiteren Aspekt wird vorgeschlagen, dass der Argumentationsvorschlag gemeinsam mit einer sortierten Trefferliste der Kandidatentscheidungen ausgegeben wird, wobei der Vorschlag vorzugsweise einen Verweis auf relevante Vorlagefragen einer höheren oder höchsten Gerichtsbarkeit enthält.

Zusätzlich wird vorgesehen, dass der erzeugte Argumentationsvorschlag zusammen mit einer geordneten Liste der relevanten Kandidatentscheidungen ausgegeben wird. Diese Trefferliste ist vorzugsweise nach Relevanzkriterien wie semantischer Ähnlichkeit, Normkonformität oder Instanzautorität sortiert. Durch die kombinierte Ausgabe von Textvorschlag und Quellenreferenz kann der Nutzer direkt nachvollziehen, wie die jeweiligen Fundstellen in die Argumentation eingeflossen sind. Der Argumentationsvorschlag enthält dabei vorzugsweise explizite Verweise auf bestehende Vorlagefragen vor dem Europäischen Gerichtshof. Diese Verweise dienen dazu, unionsrechtliche Bezüge transparent zu machen und die Möglichkeit strategischer Bezugnahme auf anhängige Verfahren zu eröffnen. Dadurch erhöht sich die Anschlussfähigkeit der Argumentation an übergeordnete Rechtsfragen und deren potentielle Entwicklung.

In einem weiteren Aspekt wird vorgeschlagen, dass zumindest einer der Gewichtungsparameter des Rerankers oder das Embedding-Netzwerk in Abhängigkeit der Online-Feedback-Variable automatisch aktualisiert wird.

Darüber hinaus wird vorgesehen, dass das Verfahren in der Lage ist, sich selbstständig an veränderte Nutzungsmuster oder Präferenzen anzupassen. Hierzu wird mindestens ein Parameter, der im neuronalen Reranker zur Gewichtung der Relevanz beiträgt, oder das zugrunde liegende Embedding-Netzwerk automatisch angepasst. Diese Anpassung erfolgt vorzugsweise in Abhängigkeit von einer sogenannten Online-Feedback-Variable. Eine solche Variable misst in Echtzeit oder in Intervallen die tatsächliche Nutzung oder Rezeption einzelner Entscheidungen, etwa durch Klicks, Zitierungen oder explizite Nutzerbewertungen. Die automatische Aktualisierung ermöglicht es dem System, Relevanzbewertungen laufend zu justieren und sich dynamisch an geänderte rechtliche Bewertungstrends oder Nutzererwartungen anzupassen. Dies verbessert langfristig die Qualität der vorgeschlagenen Entscheidungen und erhöht die Treffergenauigkeit bei gleichzeitiger Reduktion irrelevanter Inhalte.

In einem weiteren Aspekt wird vorgeschlagen, dass die Graph-Repräsentation spezifische Knotentypen für Obersatz, Untersatz, Subsumtion und Widerspruch umfasst und die Kanten Wahrscheinlichkeiten einer juristischen Gültigkeit repräsentieren.

Die Graph-Repräsentation der Argumentstruktur ist so ausgestaltet, dass sie spezifische Knotenarten unterscheidet, die vorzugsweise den zentralen juristischen Bausteinen eines Gutachtensstils entsprechen. Dazu gehören Knoten für den Obersatz, der die anzuwendende Norm benennt, für den Untersatz, der den konkreten Sachverhalt beschreibt, sowie für die Subsumtion, in der geprüft wird, ob die Norm auf den Sachverhalt passt. Zusätzlich wird ein Knoten für den Widerspruch vorgesehen, der vorzugsweise gegenteilige oder gegenläufige Argumentationsrichtungen markiert. Diese Unterscheidung ermöglicht eine feingranulare Modellierung juristischer Denkprozesse. Die Verbindungen zwischen diesen Knoten, also die Kanten des Graphen, sind mit Wahrscheinlichkeitswerten versehen, die vorzugsweise ausdrücken, in welchem Maß eine juristische Schlussfolgerung aus der Beziehung zwischen zwei Knoten als gültig angesehen werden kann. Diese Wahrscheinlichkeiten entstehen aus semantischer Analyse und Training auf annotierten Rechtsentscheidungen. Durch die Kombination strukturierter Knotentypen mit gewichteten Kanten wird eine präzise, logisch nachvollziehbare Argumentstruktur erzeugt, die sich sowohl zur maschinellen Verarbeitung als auch zur transparenten Nachverfolgung eignet.

Die Graph-Repräsentation wird vorzugsweise nicht als frei serialisierte Textstruktur verarbeitet, sondern in eine normalisierte, speichereffiziente Graphdatenstruktur überführt, umfassend eine Knotenmerkmal-Matrix, eine Kantenindex-Matrix und einen Kantenattribut-Vektor. Die Knotentypen werden durch diskrete Typkennungen und die Kantenwahrscheinlichkeiten durch quantisierte Festkommawerte repräsentiert. Hierdurch wird die Graph-Repräsentation in einen für SIMD-, GPU- oder Vektorprozessoroperationen geeigneten Speicherbereich überführt.

Vor dem Embedding wird vorzugsweise eine Dimensionsreduktion und/oder Hash-basierte Kompaktierung der Knoten- und Kantenattribute durchgeführt, sodass nur eine vorgegebene maximale Anzahl von Knoten, Kanten und Attributkanälen in das Embedding-Netzwerk eingespeist wird. Dadurch werden Speicherzugriffe und Inferenzzeit begrenzt.

In einer bevorzugten Ausführungsform ist die Graph-Datenbank in einen ersten Vektorindex und einen zweiten Graphstrukturindex aufgeteilt. Der Vektorindex ist als Approximate-Nearest-Neighbor-Index, insbesondere HNSW-, IVF-, PQ- oder FAISS-Index, ausgebildet. Der Graphstrukturindex speichert komprimierte Graphsignaturen, insbesondere Bloom-Filter-, MinHash- oder SimHash-Signaturen der Knotentyp- und Kantentypverteilungen. Bei einer Anfrage wird zunächst nur der Vektorindex abgefragt, um eine erste Kandidatenmenge zu erzeugen; anschließend werden nur für diese Kandidaten die Graphsignaturen aus dem Graphstrukturindex geladen. Vollständige Entscheidungsgraphen werden erst nach Überschreiten eines Schwellwerts geladen.

Der Graphstrukturindex ist vorzugsweise ein logisch von dem Vektorindex getrennter Index, der für jeden Entscheidungsgraphen wenigstens eine komprimierte Graphsignatur und eine Referenz auf den zugehörigen vollständigen Entscheidungsgraphen speichert. Der Graphstrukturindex kann physisch in derselben Datenbank wie der Vektorindex oder in einem separaten Speicherbereich abgelegt sein. Die logische Trennung bedeutet, dass eine Abfrage des Vektorindex möglich ist, ohne vollständige Graphdaten oder Graphsignaturen laden zu müssen.

Dadurch werden zufällige Datenbankzugriffe, Hauptspeicherzugriffe und Netzwerkübertragungen reduziert, weil vollständige Graphdaten nur für eine begrenzte Teilmenge von Kandidaten übertragen und verarbeitet werden.

Ein vollständiger Entscheidungsgraph bezeichnet vorzugsweise diejenige Graph-Repräsentation einer Kandidatentscheidung, die sämtliche für das Ranking vorgesehenen Knoten, Kanten und Attribute enthält, insbesondere Argumentationsknoten, Normbezugsknoten, Instanzrangattribute und Kantenattribute. Demgegenüber enthält die komprimierte Graphsignatur nur eine reduzierte, insbesondere feste Länge aufweisende Strukturinformation des Entscheidungsgraphen.

In einem weiteren Aspekt wird vorgeschlagen, dass das Embedding-Netzwerk ein domänenspezifisch fein-getuntes Transformer-Encoder-Modell umfasst.

Das Embedding-Netzwerk, das zur Umwandlung solcher Graph-Repräsentationen in numerische Vektoren verwendet wird, basiert vorzugsweise auf einem Transformer-Encoder-Modell. Transformer-Encoder sind neuronale Netzwerkarchitekturen, die sich besonders gut zur semantischen Repräsentation von Texten eignen, da sie Kontextinformationen über lange Textbereiche hinweg verarbeiten können. Das Modell ist domänenspezifisch feinjustiert, was bedeutet, dass es mit juristischen Textdaten nachtrainiert wurde, um juristische Begrifflichkeiten, Argumentationsmuster und Normverweise zuverlässig zu erfassen. Diese Feinabstimmung erlaubt es dem Modell, die Besonderheiten juristischer Sprache gegenüber allgemeinen Sprachmodellen besser abzubilden. Die Verwendung eines derart spezialisierten Embedding-Modells führt zu einer höheren inhaltlichen Präzision bei der Vektorrepräsentation von Anfragen und Entscheidungen, was sich direkt auf die Qualität des Retrievals auswirkt.

In einem weiteren Aspekt wird vorgeschlagen, dass der Instanzhierarchie-Faktor eine Gewichtungsfunktion umfasst, die höheren Gerichtsinstanzen einen entsprechend höheren Rangbonus zuweist.

Zur Steuerung der Relevanzbewertung wird ein Gewichtungsfaktor eingesetzt, der die hierarchische Stellung der jeweiligen Gerichtsinstanz berücksichtigt. Dieser sogenannte Instanzhierarchie-Faktor ist als Funktion ausgestaltet, die vorzugsweise höheren Gerichten wie obersten Bundesgerichten oder dem EuGH einen höheren Einfluss auf das Ranking der Ergebnisse zuweist. Die Gewichtung kann beispielsweise in Form eines skalierenden Multiplikators auf die Ähnlichkeitsscores erfolgen. Diese Berücksichtigung stellt sicher, dass Entscheidungen mit höherer autoritativer Wirkung im Suchergebnis bevorzugt werden, auch wenn sie rein semantisch nicht die höchste Übereinstimmung aufweisen. Auf diese Weise wird die juristische Relevanz stärker am tatsächlichen System der Rechtsprechung ausgerichtet, wodurch die Ergebnisliste für Fachnutzer praxisnäher und belastbarer wird.

In einem weiteren Aspekt wird vorgeschlagen, dass der Norm-Konformitätsscore durch eine Ontologie-basierte Abbildung nationaler Rechtsnormen, beispielsweise auf EUrechtliche Entsprechungen, berechnet wird.

Der Norm-Konformitätsscore wird berechnet, indem nationale Rechtsnormen einer strukturierten Zuordnung zugeordnet werden, die auf einer juristischen Ontologie basiert. Eine Ontologie ist vorzugsweise ein formales, maschinenlesbares Modell von Begriffen und deren Relationen in einem Fachgebiet, hier dem europäischen und nationalen Recht. Die Ontologie bildet Abbildungsregeln, Äquivalenzen und Hierarchien zwischen Normen unterschiedlicher Herkunft ab, zum Beispiel zwischen einer nationalen Regelung und der entsprechenden übergeordneten multinationalen Richtlinie und/oder Verordnung. Durch diese strukturierte Abbildung kann automatisiert ermittelt werden, ob eine nationale Entscheidung mit dem europäischen Rechtsrahmen im Einklang steht. Der daraus berechnete Score wird vorzugsweise in das Ranking juristischer Entscheidungen integriert, sodass Urteile mit hoher unionsrechtlicher Anschlussfähigkeit priorisiert vorgeschlagen werden. Dies verbessert die Relevanz, insbesondere bei grenzüberschreitenden Sachverhalten oder bei Vorlagefragen an den EuGH.

In einem weiteren Aspekt wird vorgeschlagen, dass das Online-Feedback sich aus mindestens einem der folgenden Ereignisse ergibt: Zitierung der Entscheidung in einem späteren Urteil, positive Bewertung durch einen Nutzer oder Auswahl durch Interaktion über eine Benutzeroberfläche.

Das Online-Feedback wird aus Rückmeldungen generiert, die direkt oder indirekt aus der tatsächlichen Nutzung juristischer Entscheidungen stammen. Es basiert vorzugsweise auf mindestens einem von drei beobachtbaren Ereignissen: der Zitierung der Entscheidung in einem späteren Urteil, was eine faktische Bestätigung ihrer Relevanz darstellt; einer positiven Bewertung durch Nutzerinnen oder Nutzer, zum Beispiel in Form einer "Gefällt mir"-Funktion; oder der bewussten Auswahl über eine Benutzeroberfläche, etwa durch das Öffnen oder Herunterladen der Entscheidung. Diese Datenpunkte erlauben eine quantitative Bewertung des Nutzens einzelner Entscheidungen im Kontext realer juristischer Praxis. Durch die Rückführung dieser Informationen in das System wird eine kontinuierliche Verbesserung der Vorschlagsqualität ermöglicht, wobei insbesondere stark rezipierte Entscheidungen verstärkt zur Geltung kommen.

In einem weiteren Aspekt wird vorgeschlagen, dass der Reranker als zweistufiges Cross-Encoder-Modell ausgeführt ist, das in der ersten Stufe eine RoBERTa-Variante und in der zweiten Stufe einen Gradient-Boosting-Decision-Tree verwendet.

Der Reranker ist in zwei aufeinanderfolgende Auswertungsstufen unterteilt, wobei in der ersten Stufe ein sogenanntes Cross-Encoder-Modell auf Basis einer RoBERTa-Variante eingesetzt wird. Ein Cross-Encoder ist vorzugsweise ein Sprachmodell, das zwei Texte gleichzeitig verarbeitet und deren Beziehung - etwa in Form von Relevanz oder logischer Kohärenz - direkt bewertet. RoBERTa ist eine leistungsstarke Weiterentwicklung des BERT-Modells mit verbessertem Training und tieferer Kontextverarbeitung. Diese erste Stufe liefert eine differenzierte, semantisch fundierte Bewertung der Beziehung zwischen Anfrage und potenzieller Entscheidung. In der zweiten Stufe folgt ein Gradient-Boosting-Decision-Tree, ein vorzugsweise baumbasierter Klassifikator, der mehrere gewichtete Entscheidungsbäume kombiniert, um die finale Relevanzbewertung durch nicht-lineare Entscheidungsregeln weiter zu verfeinern. Diese Kombination aus tiefem Sprachverständnis und robuster Klassifikationslogik ermöglicht eine präzisere, mehrdimensionale Bewertung von Trefferlisten in juristischen Kontexten.

Der Reranker ist vorzugsweise als kaskadierter Reranker ausgebildet, wobei eine erste, ressourcenschonende Stufe einen quantisierten Cross-Encoder oder ein distilliertes Transformer-Modell verwendet und nur Kandidaten oberhalb eines technischen Aktivierungsschwellwerts an eine zweite, rechenintensivere Stufe weiterleitet. Die zweite Stufe wird nur für höchstens N Kandidaten ausgeführt, wobei N dynamisch in Abhängigkeit von Prozessorlast, GPU-Speicherauslastung oder Antwortzeitbudget gewählt wird.

Das Antwortzeitbudget kann eine vorgegebene maximale Zeitdauer für wenigstens einen Verarbeitungsteil, insbesondere für das Reranking, oder für die Gesamtzeit vom Eingang der Suchanfrage bis zur Ausgabe des Rankings bezeichnen. Die Anzahl N kann beispielsweise verringert werden, wenn eine gemessene Prozessor- oder GPU-Auslastung einen Auslastungsschwellwert überschreitet, oder erhöht werden, wenn die gemessene Auslastung unterhalb eines unteren Auslastungsschwellwerts liegt. N kann ferner durch einen Minimalwert und einen Maximalwert begrenzt sein.

Hierdurch wird die Ausführung rechenintensiver neuronaler Modelle auf eine technisch begrenzte Kandidatenmenge beschränkt, wodurch Latenzspitzen und GPU-Speicherüberläufe vermieden werden.

In einem weiteren Aspekt wird vorgeschlagen, dass das Verfahren eine maximale Antwortzeit von 500 Millisekunden nicht überschreitet.

Das Verfahren ist darauf ausgelegt, eine maximale Antwortzeit von 500 Millisekunden nicht zu überschreiten. Diese zeitliche Begrenzung bezieht sich vorzugsweise auf den Zeitraum zwischen dem Eingang einer Suchanfrage und der Bereitstellung der priorisierten Ergebnisse. Um die Einhaltung dieser Anforderung sicherzustellen, werden verschiedene Maßnahmen kombiniert. Dazu zählen vorzugsweise die Vektorindexierung der Entscheidungsdatenbank in Form eines Approximate-Nearest-Neighbor-Index (z. B. FAISS oder HNSW), das Caching häufig gestellter Anfragen, sowie die parallele Verarbeitung einzelner Verarbeitungsschritte durch asynchrone Services oder GPU-Beschleunigung. Auch das Sprachmodell und der Reranker werden gezielt so konfiguriert, dass ihre Ausführungsdauer im oberen Zeitrahmen planbar bleibt, etwa durch Begrenzung der Tokenanzahl oder Reduktion der Modelltiefe im Echtzeitbetrieb. Die Einhaltung der Antwortzeitvorgabe unterstützt insbesondere die Integration des Verfahrens in interaktive Nutzeroberflächen oder zeitkritische Entscheidungsszenarien, etwa während mündlicher Verhandlungen.

In einem weiteren Aspekt wird vorgeschlagen, dass das Retrieval-Augmented-Generation-Modul eine Prompt-Orchestrierungsschicht einsetzt, welche die Relevanzreihenfolge und Redundanzentfernung der eingebetteten Texte steuert.

Das Retrieval-Augmented-Generation-Modul wird um eine zusätzliche logische Einheit erweitert, die als Prompt-Orchestrierungsschicht fungiert. Diese Schicht übernimmt vorzugsweise zwei Aufgaben: die Steuerung der Reihenfolge, in der Inhalte aus abgerufenen Präzedenzentscheidungen in das Sprachmodell eingebunden werden, sowie die Entfernung redundanter oder überlappender Textanteile. Dabei wird etwa sichergestellt, dass höher bewertete Dokumente zuerst berücksichtigt werden und dass semantisch identische Textabschnitte, die in mehreren Entscheidungen vorkommen, nur einmal in den Prompt aufgenommen werden. Diese Orchestrierung führt zu einer effizienteren Nutzung des Eingabekontexts (z. B. 4096 Token-Limit) und erhöht die Präzision der generierten Vorschläge. Prompt-Orchestrierung bezeichnet vorzugsweise ein regelbasiertes oder lernbasiertes Verfahren, das die Inhalte in strukturierter Weise aufbereitet, bevor sie dem Sprachmodell zur Generierung übergeben werden.

Die Prompt-Orchestrierungsschicht ist dazu eingerichtet, aus den gerankten Präzedenztexten Textsegmente mit jeweils gespeicherten Tokenlängen zu verwalten und unter Einhaltung eines vorgegebenen maximalen Kontextfensters eine Teilmenge auszuwählen. Redundante Segmente werden mittels Hashing semantischer Segmentvektoren oder mittels n-Gramm-Signaturen erkannt und nur einmal in den Promptpuffer geschrieben. Der Promptpuffer wird als ringförmiger Speicher oder als vorallokierter Speicherbereich verwaltet. Dadurch wird die Anzahl der an das generative Sprachmodell übertragenen Tokens reduziert und die Inferenzzeit des Generierungsmoduls verringert.

In einem weiteren Aspekt wird vorgeschlagen, dass ein Kontrolltoken-Mechanismus eingesetzt wird, der sicherstellt, dass der generierte Vorschlag einem vordefinierten juristischen Argumentationsschema entspricht.

Zur Gewährleistung juristisch valider Textausgaben wird ein Kontrolltoken-Mechanismus eingesetzt. Dabei handelt es sich vorzugsweise um spezielle Steuerzeichen oder codierte Tokens, die dem Sprachmodell vorgegeben werden und bestimmte strukturelle oder semantische Eigenschaften der auszugebenden Texte definieren. In diesem Fall wird über die Kontrolltokens sichergestellt, dass der generierte Text einem vorgegebenen juristischen Argumentationsschema folgt, etwa dem Aufbau aus Obersatz, Untersatz und Subsumtion. Der Mechanismus kann als Teil des Promptings realisiert sein oder in der Decoding-Phase wirken, etwa über einen Konformitätsfilter. Durch diese Steuerung wird erreicht, dass die Ausgabe nicht nur sprachlich, sondern auch inhaltlich konsistent und anschlussfähig an juristische Praxis ist. Dies erleichtert die Übernahme der generierten Argumentation in Schriftsätze oder Urteilsentwürfe.

In einem weiteren Aspekt wird vorgeschlagen, dass alle Zwischenergebnisse revisionssicher in einer Audit-Datenbank protokolliert werden, um regulatorischen Anforderungen einer EU-KI-Verordnung zu genügen.

Alle im Laufe des Verfahrens entstehenden Zwischenergebnisse werden so gespeichert, dass sie revisionssicher in einer speziell vorgesehenen Audit-Datenbank abgelegt werden. Revisionssicherheit bedeutet vorzugsweise, dass einmal gespeicherte Daten weder gelöscht noch nachträglich verändert werden können, wobei jede Änderung oder jeder Zugriff protokolliert wird. Die Audit-Datenbank ist so ausgestaltet, dass sie alle relevanten Prozessschritte - darunter Anfrage, Argumentstruktur, Vektorisierung, Ranking-Ergebnisse, Gewichtungen und generierte Textvorschläge - in nachvollziehbarer Form archiviert. Die Struktur der Datenbank orientiert sich vorzugsweise an den Anforderungen der EU-KI-Verordnung (EU-AI-Act), insbesondere im Hinblick auf Transparenz-, Dokumentations- und Nachvollziehbarkeitspflichten für Hochrisiko-KI-Systeme. Dadurch wird sichergestellt, dass der vollständige Ablauf einer Entscheidungsempfehlung jederzeit kontrollierbar und prüfbar ist, etwa durch Behörden oder Auditoren. Gleichzeitig erlaubt dieses Vorgehen eine lückenlose Qualitätssicherung sowie die rechtssichere Einbettung des Systems in behördliche oder gerichtliche Verfahren.

Die Audit-Datenbank speichert die Zwischenergebnisse in einer append-only-Datenstruktur, wobei jeder Audit-Eintrag einen kryptographischen Hash des vorhergehenden Audit-Eintrags sowie Hashwerte der Anfrage, der Graph-Repräsentation, des Vektorraumsatzes und der Rankingparameter enthält. Die Hashkette kann zusätzlich mit einem Zeitstempel oder einer digitalen Signatur versehen werden. Dadurch wird eine nachträgliche Manipulation der maschinell erzeugten Zwischenergebnisse technisch erkennbar, ohne dass vollständige Text- oder Vektordaten erneut verarbeitet werden müssen.

In einem weiteren Aspekt wird vorgeschlagen, dass die Gewichtungen des Rankings mittels einer Reinforcement-Learning-Schleife kontinuierlich optimiert werden, wobei insbesondere ein proximal-policy-optimization-Algorithmus zur Anwendung kommt.

Zur kontinuierlichen Verbesserung der Relevanzbewertung im Rahmen des Rankings wird eine lernende Optimierung eingesetzt, die auf einer Reinforcement-Learning-Schleife basiert. Reinforcement Learning ist ein Verfahren des maschinellen Lernens, bei dem ein Modell durch Rückmeldungen aus der Umgebung - sogenannte Belohnungen - lernt, bessere Entscheidungen zu treffen. In diesem Fall wird vorzugsweise ein sogenannter Proximal-Policy-Optimization-Algorithmus (PPO) verwendet, der für stabile Lernfortschritte sorgt, ohne dass abrupte Parameteränderungen zu Performanceeinbrüchen führen. PPO ist besonders geeignet für Umgebungen mit kontinuierlicher Rückmeldung, wie sie im juristischen Kontext durch Zitierungen, Nutzerbewertungen oder Auswahlhäufigkeiten entstehen. Das System bewertet dabei fortlaufend, welche Gewichtungen für Ähnlichkeit, Instanzrang und Normkonformität im Ranking zu den besten Ergebnissen führen, und passt diese Parameter dynamisch an. Auf diese Weise reagiert das Verfahren adaptiv auf veränderte Nutzungsmuster, neue Rechtsprechungstrends oder systematisches Feedback, ohne dass manuelle Nachjustierungen erforderlich sind. Dies erhöht die Relevanz und Aktualität der Vorschläge im laufenden Betrieb.

In einem weiteren Aspekt wird ein Computerprogrammprodukt vorgeschlagen, umfassend Befehle, die bei der Ausführung des Programms durch einen Computer diesen veranlassen, die Schritte des vorliegenden Verfahrens in einem seiner Aspekte auszuführen.

Das Computerprogrammprodukt umfasst vorzugsweise eine Sammlung von Anweisungen, die in einer oder mehreren Programmiersprachen geschrieben sind und die vorzugsweise darauf ausgelegt sind, die im Verfahren beschriebenen Aufgaben und/oder Funktionen zu erfüllen, wenn sie von einem Computer ausgeführt werden. Die Anweisungen im Programm sind vorzugsweise so gestaltet, dass sie den Computer veranlassen, die verschiedenen Schritte und Abläufe des Verfahrens gemäß den angegebenen Aspekten zu durchlaufen und durchzuführen.

In einem weiteren Aspekt wird ein computerlesbarer Datenträger vorgeschlagen, auf dem ein solches Computerprogrammprodukt gespeichert ist.

Dieser computerlesbare Datenträger kann verschiedene physische Medien umfassen, wie CDs, DVDs, USB-Sticks, Festplatten oder Halbleiterspeicher, bspw. SSDs, die von Computern oder ähnlichen elektronischen Geräten gelesen werden können. Das auf dem Datenträger gespeicherte Computerprogrammprodukt umfasst vorzugsweise eine Sammlung von Anweisungen oder Code, die von einem Computer ausgeführt werden können, um spezifische Funktionen oder Aufgaben zu erfüllen. Das Programm kann in verschiedenen Programmiersprachen geschrieben sein und unterschiedliche Komponenten wie ausführbare Dateien, Bibliotheken, Konfigurationsdateien und Dokumentationen enthalten. Der Datenträger ermöglicht es vorzugsweise dem Computer, das darauf gespeicherte Programm zu lesen und auszuführen, um die vorgesehenen Funktionen zu realisieren.

Weitere mögliche Ausgestaltungen, Weiterbildungen, Aspekte und/oder Implementierungen der Erfindung weisen auch nicht explizit genannte Kombinationen von den zuvor genannten oder nachstehend noch zu erläuternden Merkmalen auf. Eine, ein wird vorliegend als "mindestens eine" bzw. "mindestens ein" verstanden.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

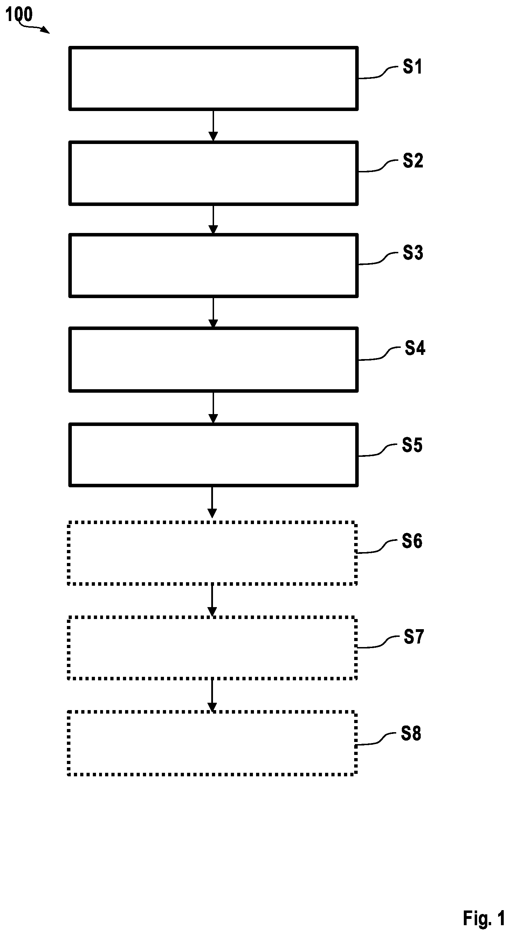

- Fig. 1: zeigt ein schematisches Flussdiagramm eines Ausführungsbeispiels des vorliegenden Verfahrens.

### Detaillierte Beschreibung der Zeichnungen

In den Figuren der Zeichnungen bezeichnen gleiche Bezugszeichen gleiche oder funktionsgleiche Elemente, Bauteile oder Komponenten, soweit nichts Gegenteiliges angegeben ist.

Fig. 1 zeigt ein schematisches Flussdiagramm eines Verfahrens zur automatisierten Ermittlung von zu einem juristischen Sachverhalt passenden Präzedenzentscheidungen.

Das Verfahren kann in einer beliebigen Ausführungsform zumindest teilweise durch ein System 100 ausgeführt werden, das hierzu mehrere, nicht näher dargestellte Komponenten umfasst, beispielsweise eine oder mehrere Bereitstellungseinrichtungen und/oder mindestens eine Auswerte- und Recheneinrichtung. Es versteht sich, dass die Bereitstellungseinrichtung gemeinsam mit der Auswerte- und Recheneinrichtung ausgebildet sein kann oder hiervon getrennt ist. Ferner kann das System 100 zusätzlich eine Speichereinrichtung und/oder eine Ausgabeeinrichtung und/oder eine Anzeigeeinrichtung und/oder eine Eingabeeinrichtung umfassen.

Das computerimplementierte Verfahren umfasst mindestens die folgenden Schritte:
In einem Schritt S1 erfolgt ein Empfangen einer Suchanfrage mit Angaben zur Instanzebene, zum Sachverhalt und/oder zu einer oder mehreren relevanten Rechtsnormen.

In einem Schritt S2 erfolgt ein extraktives und semantisches Parsen der Suchanfrage mittels eines Sprach-Modells, wobei eine mehrdimensionale Argumentstruktur bestehend aus Prämisse, Konklusion, Normbezug und Instanzrang identifiziert und als strukturierte Graph-Repräsentation erzeugt wird.

In einem Schritt S3 erfolgt ein Umwandeln dieser Graph-Repräsentation in einen d-dimensionalen Vektorraumsatz mittels eines trainierten Embedding-Netzwerks.

In einem Schritt S4 erfolgt ein Retrieval einer Menge von Kandidatentscheidungen aus einer Graph-Datenbank, wobei der erzeugte Vektorraumsatz mit zuvor indexierten Entscheidungsvektoren verglichen wird und zusätzlich ein Instanzhierarchie-Faktor angewendet wird, der den Rang oder die Bedeutung der jeweiligen Gerichtsinstanz berücksichtigt.

In einem Schritt S5 erfolgt ein Ranking der Kandidatentscheidungen mittels eines neuronalen Rerankers, der gewichtet auf mindestens eine der folgenden Größen reagiert: eine semantische Ähnlichkeitsmetrik, ein Norm-Konformitätsscore und/oder eine Online-Feedback-Variable, welche sich vorzugsweise aus Zitiererfolgen realer Gerichtsentscheidungen speist. Das Ranking dient dazu, die für den juristischen Sachverhalt am besten geeigneten Präzedenzentscheidungen zu identifizieren.

Zusätzlich können folgende Schritte optional ausgeführt werden:
In einem optionalen Schritt S6 erfolgt ein Erzeugen eines strukturierten Argumentationsvorschlags, indem ein Retrieval-Augmented-Generation-Modul die Top-k-Ränge des Rankings gemeinsam mit der Graph-Repräsentation in ein Sprachmodell promptet, um daraus eine juristisch strukturierte Textausgabe zu generieren.

In einem optionalen Schritt S7 erfolgt ein Ausgeben des generierten Argumentationsvorschlags sowie einer sortierten Trefferliste der ermittelten Kandidatentscheidungen. Der Vorschlag kann vorzugsweise Verweise auf bestehende oder anhängige (EU-) Vorlagefragen enthalten, um unionsrechtliche Bezüge explizit zu machen.

In einem optionalen Schritt S8 erfolgt ein Aktualisieren zumindest eines der Gewichtungsparameter des Rerankers oder des zugrunde liegenden Embedding-Netzwerks in Abhängigkeit der Online-Feedback-Variable. Diese Aktualisierung erfolgt vorzugsweise automatisch auf Grundlage von Nutzungs- oder Zitationsdaten, um eine kontinuierliche Anpassung an die tatsächliche Rechtsanwendung zu ermöglichen.

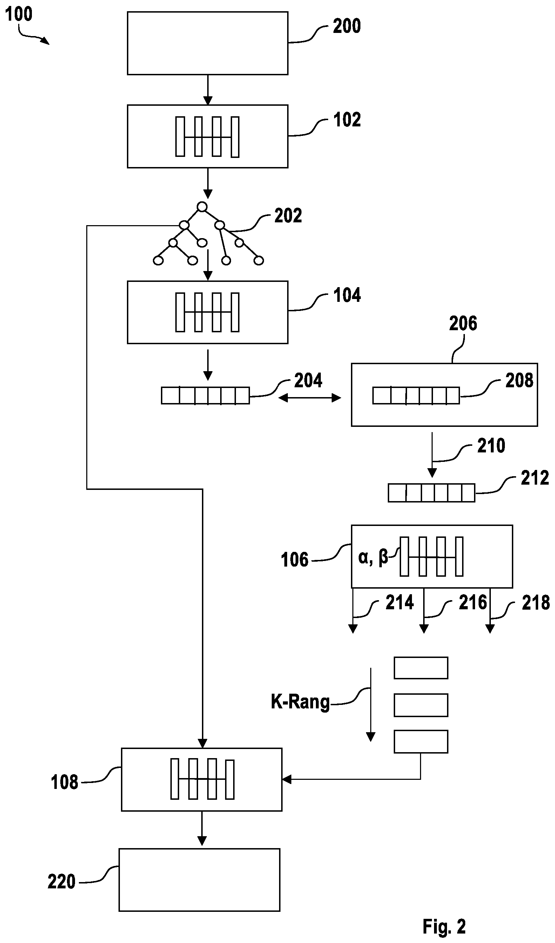

Fig. 2 zeigt ein schematisches Blockdiagramm eines Ausführungsbeispiels des Verfahrens zur automatisierten Ermittlung von zu einem juristischen Sachverhalt passenden Präzedenzentscheidungen. Das dargestellte System 100 kann in einer rechnergestützten Umgebung, auch in einer Cloud oder auf einem Server, betrieben werden und umfasst mehrere funktionale Module, die den in den Ansprüchen beschriebenen Verfahrensschritten entsprechen.

Im ersten Schritt (S1) wird eine Suchanfrage 200 empfangen, die Angaben zur Instanzebene, zum Sachverhalt und/oder zu einer oder mehreren Rechtsnormen enthält. Diese Anfrage wird einem Sprachmodell 102 zugeführt, das die Anfrage extraktiv und semantisch analysiert. In Schritt S2 wird dabei eine mehrdimensionale Argumentstruktur erkannt und als strukturierte Graph-Repräsentation 202 ausgegeben, wobei Knoten beispielsweise Prämisse, Konklusion, Normbezug und Instanzrang abbilden.

In Schritt S3 erfolgt durch ein trainiertes Embedding-Netzwerk 104 die Transformation der Graph-Repräsentation 202 in einen d-dimensionalen Vektorraumsatz 204. Der Vektorsatz wird für ein semantisches Vergleichsverfahren verwendet. Parallel dazu enthält eine Graph-Datenbank 206 eine Vielzahl vorab indexierter Entscheidungsvektoren 208, die mit dem Anfragenvektor 204 verglichen werden. Dabei wird ein Instanzhierarchie-Faktor 210 berücksichtigt, um Gerichtsinstanzen mit höherer Autorität bevorzugt zu gewichten. Auf Basis dieses Vergleichs wird eine Menge 212 von Kandidatentscheidungen ermittelt (Schritt S4).

In Schritt S5 erfolgt durch einen neuronalen Reranker 106 eine Bewertung und Sortierung der Kandidatentscheidungen. Der Reranker verarbeitet semantische Ähnlichkeitsmetriken 214, einen Norm-Konformitätsscore 216 sowie eine Online-Feedback-Variable 218. Letztere ergibt sich vorzugsweise aus Zitierungen durch spätere Urteile, Nutzerbewertungen oder Auswahlverhalten. Diese Informationen fließen in eine gewichtete Bewertung (Parameter α, β) ein, durch die ein Ranking der Entscheidungen erzeugt wird. Aus dem Ranking wird eine Top-k-Auswahl getroffen, welche an das Modul 108 übergeben wird.

In einem optionalen Schritt S6 erzeugt das Retrieval-Augmented-Generation-Modul 108 einen strukturierten Argumentationsvorschlag, indem es die Top-k-Ränge aus dem Ranking zusammen mit der ursprünglichen Argumentstruktur 202 in ein Sprachmodell einspeist ("promptet"). Der daraus erzeugte Argumentationsvorschlag 220 wird in Schritt S7 zusammen mit einer sortierten Trefferliste ausgegeben. Der Vorschlag 220 kann vorzugsweise Verweise auf unionsrechtliche Vorlagefragen enthalten, um (EU-) relevante Zusammenhänge herzustellen.

Ferner kann in einem optionalen Schritt S8 eine automatische Aktualisierung der Gewichtungsparameter α, β des Rerankers 106 oder des Embedding-Netzwerks 104 vorgenommen werden, wobei die Feedback-Variable 218 als Grundlage für die Anpassung dient. Dies ermöglicht ein lernendes Systemverhalten, das sich dynamisch an tatsächliche Nutzungsmuster anpasst.

Die dargestellte Ausführung erlaubt damit eine strukturierte, semantisch fundierte und dynamisch optimierbare Ermittlung relevanter Präzedenzentscheidungen unter Berücksichtigung juristischer Relevanzkriterien und regulatorischer Anforderungen.

### Bezugszeichenliste

- 100: System
- 102: Sprach-Modul
- 104: Embedding-Netzwerk
- 106: Reranker
- 108: Retrieval-Augmented-Generation-Modul
- 200: Suchanfrage
- 202: Graph-Repräsentation
- 204: Vektorraumsatz
- 206: Graph-Datenbank
- 208: Vorab indexierte Entscheidungsvektoren
- 210: Instanzhierarchie-Faktor zur Priorisierung höherer Gerichte
- 212: Ergebnismenge der abgerufenen Kandidatentscheidungen
- 214: Semantische Ähnlichkeitsmetrik im Reranking-Modul
- 216: Norm-Konformitätsscore
- 218: Online-Feedback-Variable
- 220: Argumentationsvorschlag

- S1: Verfahrensschritt
- S2: Verfahrensschritt
- S3: Verfahrensschritt
- S4: Verfahrensschritt
- S5: Verfahrensschritt
- S6: Verfahrensschritt
- S7: Verfahrensschritt
- S8: Verfahrensschritt

## Patentansprüche

1. Verfahren zur automatisierten Ermittlung von zu einem juristischen Sachverhalt passenden Präzedenzentscheidungen, umfassend die Schritte:
a) Empfangen (S1) einer Suchanfrage (200) mit Angaben zu Instanzebene, Sachverhalt und/oder Rechtsnorm;
b) extraktives und semantisches Parsen (S2) der Suchanfrage (200) mittels eines Sprach-Modells (102), wobei eine mehrdimensionale Argumentstruktur als Graph-Repräsentation (202) erzeugt wird;
c) Umwandeln (S3) der Graph-Repräsentation (202) in einen d-dimensionalen Vektorraumsatz (204) durch ein trainiertes Embedding-Netzwerk (104);
d) Retrieval (S4) einer Menge (212) von Kandidatentscheidungen aus einer Graph-Datenbank (206), indem der Vektorraumsatz (204) mit vorab indexierten Entscheidungsvektoren (208) verglichen und ein Instanzhierarchie-Faktor (210) angewendet wird; und
e) Ranking (S5) der Menge (212) von Kandidatentscheidungen mittels eines neuronalen Rerankers (106), der gewichtet (α, β) auf eine semantische Ähnlichkeitsmetrik (214) und/oder einen Norm-Konformitätsscore (216) und/oder eine Online-Feedback-Variable (218) reagiert, die sich aus Zitiererfolgen realer Gerichtsentscheidungen speist, um derart die zu dem juristischen Sachverhalt passende Präzedenzentscheidungen zu ermitteln.

2. Verfahren nach Anspruch 1, ferner aufweisend:
f) Erzeugen (S6) eines strukturierten Argumentationsvorschlags (220), indem ein Retrieval-Augmented-Generation-Modul (108) eine Top-k-Rang (k ≥ 1) des Rankings gemeinsam mit der Graph-Repräsentation (202) in ein Sprachmodell promptet; und/oder
g) Ausgeben (S7) des Argumentationsvorschlags (220) und einer sortierten Trefferliste der Kandidatentscheidungen, wobei der Argumentationsvorschlag (220) vorzugsweise einen Verweis auf gerichtliche Vorlagefragen bereitstellt; und/oder
h) Aktualisieren (S8) zumindest eines der Gewichtungsparameter (α, β) des Rerankers oder des Embedding-Netzwerks in Abhängigkeit der Online-Feedback-Variable (218).

3. Verfahren nach Anspruch 1 oder 2, wobei wobei die Graph-Repräsentation vor dem Umwandeln in den Vektorraumsatz in eine speichereffiziente Graphdatenstruktur mit Knotenmerkmal-Matrix, Kantenindex-Matrix und Kantenattribut-Vektor transformiert wird und/oder wobei die Graph-Repräsentation (202) Knotentypen für Obersatz, Untersatz, Subsumtion sowie Widerspruch umfasst und Kanten Wahrscheinlichkeiten einer juristischen Gültigkeit aufweisen.

4. Verfahren nach einem der Ansprüche 1-3, wobei das Embedding-Netzwerk ein domänenspezifisch feingetuntes Transformer-Encoder-Modell aufweist.

5. Verfahren nach einem der Ansprüche 1-4, wobei der Instanzhierarchie-Faktor (210) eine Gewichtungsfunktion implementiert, die einer höheren Gerichtsinstanz einen höheren Rangbonus zuweist.

6. Verfahren nach einem der Ansprüche 1-5, wobei der Norm-Konformitätsscore (216) mittels einer Ontologie-basierten Abbildung nationaler Rechtsnormen auf korrespondierende Normen einer gemeinschaftlichen Rechtsordnung ermittelt wird.

7. Verfahren nach einem der Ansprüche 1-6, wobei das Online-Feedback (218) sich aus mindestens einem der folgenden Ereignisse ableitet: Zitierung der vorgeschlagenen Präzedenzentscheidung in einem späteren Urteil, Positive-Rating eines Nutzers, oder Auswahl über eine Graphical-User-Interface-Interaktion.

8. Verfahren nach einem der Ansprüche 1-7, wobei der Reranker als kaskadierter Reranker betrieben wird und eine rechenintensivere Reranking-Stufe nur für höchstens N Kandidaten ausgeführt wird, wobei N abhängig von einem Antwortzeitbudget und/oder einer aktuellen Prozessor- oder GPU-Auslastung festgelegt wird und/oder wobei der Reranker als zweistufiges Cross-Encoder-Modell ausgebildet ist, wobei in einer ersten Stufe eine RoBERTa-Variante und in einer zweiten Stufe ein Gradient-Boosting-Decision-Tree eingesetzt werden.

9. Verfahren nach einem der Ansprüche 1-8, wobeidie Graph-Datenbank einen Approximate-Nearest-Neighbor-Index und einen separaten Graphstrukturindex umfasst, wobei zunächst über den Approximate-Nearest-Neighbor-Index eine erste Kandidatenmenge bestimmt wird und anschließend nur für die erste Kandidatenmenge komprimierte Graphsignaturen aus dem Graphstrukturindex geladen und verglichen werden.

10. Verfahren nach einem der Ansprüche 1-9, wobei das Retrieval-Augmented-Generation-Modul vor dem Prompten eine Prompt-Orchestrierungs-schicht einsetzt, welche die Reihenfolge der in den Prompt aufgenommenen Präzedenztexte anhand des Rankings festlegt und redundante Abschnitte entfernt.

11. Verfahren nach einem der Ansprüche 1-10, wobei während des Generierungsschritts (S6) ein Kontrolltoken-Mechanismus angewandt wird, der die Einhaltung eines vordefinierten juristischen Argumentations-schemas erzwingt.

12. Verfahren nach einem der Ansprüche 1-11, wobei alle Zwischenergebnisse (202, 204, 208, 210, 214, 216, 218) protokolliert und revisionssicher in einer Audit-Datenbank gespeichert werden, um regulatorische Nachweis-pflichten gemäß EU-KI-Verordnung zu erfüllen.

13. Verfahren nach einem der Ansprüche 1-12, wobei die Gewichte (α, β) des Rankings über eine Reinforcement-Learning-Schleife mit Reward-Signal aus der Feedback-Variable (218) fortlaufend optimiert werden, wobei ein proximal-policy-optimization-Algorithmus verwendet wird.

14. Computerprogrammprodukt, umfassend Befehle, die bei der Ausführung des Programms durch einen Computer diesen veranlassen, die Schritte des Verfahrens nach einem der Ansprüche 1 bis 13 auszuführen.

15. System (100) zur automatisierten Ermittlung von zu einem juristischen Sachverhalt passenden Präzedenzentscheidungen, wobei das System (100) eine Auswerte- und Recheneinrichtung aufweist, die dazu ausgebildet ist, die folgenden Schritte auszuführen:
a) Empfangen (S1) einer Suchanfrage (200) mit Angaben zu Instanzebene, Sachverhalt und/oder Rechtsnorm;
b) extraktives und semantisches Parsen (S2) der Suchanfrage (200) mittels eines Sprach-Modells, wobei eine mehrdimensionale Argumentstruktur als Graph-Repräsentation (202) erzeugt wird;
c) Umwandeln (S3) der Graph-Repräsentation (202) in einen d-dimensionalen Vektorraumsatz (204) durch ein trainiertes Embedding-Netzwerk;
d) Retrieval (S4) einer Menge (212) von Kandidatentscheidungen aus einer Graph-Datenbank (206), indem der Vektorraumsatz (204) mit vorab indexierten Entscheidungsvektoren (208) verglichen und vorzugsweise ein Instanzhierarchie-Faktor (210) angewendet wird;
e) Ranking (S5) der Kandidatentscheidungen mittels eines neuronalen Rerankers, der gewichtet (α, β) auf eine semantische Ähnlichkeitsmetrik und/oder Norm-Konformitätsscore (216) und/oder eine Online-Feedback-Variable (218) reagiert, die sich vorzugsweise aus Zitiererfolgen realer Gerichtsentscheidungen speist, um derart die zu dem juristischen Sachverhalt passende Präzedenzentscheidungen zu ermitteln.
